Europäisches Patentamt

European Patent Office

Office européen des brevets

(19)

(11) Numéro de publication: **0 380 424**
**A1**

(12) DEMANDE DE BREVET EUROPEEN

(21) Numéro de dépôt: 90400224.3

(22) Date de dépôt: 25.01.90

(51) Int. Cl.5: **B01D 61/36, A23L 2/08**

(30) Priorité: 26.01.89 FR 8900943

(43) Date de publication de la demande:
01.08.90 Bulletin 90/31

(84) Etats contractants désignés:
**DE ES IT**

(71) Demandeur: **MORGANE**
**Tour Fiat - Cedex 16, 1, place de la Coupole**
**F-92084 Paris La Défense(FR)**

Demandeur: **ELECTRICITE DE FRANCE**
**Service National**
**2, rue Louis Murat**
**F-75008 Paris(FR)**

(72) Inventeur: **Buvet, René**
**23, allée de la Toison d'Or**
**F-94000 Creteil(FR)**
Inventeur: **Idier, Lionel**
**35, rue de la Butte aux Cailles**
**F-75013 Paris(FR)**

(74) Mandataire: **Kedinger, Jean-Paul et al**
**c/o Cabinet Malemont 42, avenue du**
**Président Wilson**
**F-75116 Paris(FR)**

(54) **Procédé de concentration par pervaporation d'un liquide aqueux contenant des composés organiques volatils ou entraînables à la vapeur d'eau.**

(57) Procédé de concentration d'un liquide aqueux contenant des composés organiques volatils ou entraînables à la vapeur d'eau et éventuellement des sucres, caractérisé en ce qu'il comprend une étape de pervaporation qui consiste dans

la mise en contact dudit liquide avec la face amont d'une membrane constituée par un polymère insoluble dans l'eau, absorbant l'eau et comprenant de 20 à 80 % en poids de motifs monomère acide carboxylique polymérisés et/ou greffés, les groupes carboxyle portés par ces motifs étant en tout ou partie sous forme de sel, et

le maintien, du côté de la face aval de la membrane, d'une pression inférieure à la pression partielle de vapeur d'eau dudit liquide aqueux à concentrer à la température à laquelle il est mis en contact de ladite face amont,

de sorte que l'eau du liquide aqueux est transférée, préférentiellement auxdits composés organiques et sucres, de la face amont à la face aval, pour obtenir, du côté de cette face aval, un perméat sous forme vapeur essentiellement exempt desdits composés organiques et sucres et, du côté de la face amont, un rétentat aqueux liquide enrichi en lesdits composés organiques et sucres.

Ce procédé est en particulier utilisable pour la concentration de jus de fruits ou de moûts.

## Procédé de concentration par pervaporation d'un liquide aqueux contenant des composés organiques volatils ou entraînables à la vapeur d'eau

La présente invention concerne un nouveau procédé de concentration d'un liquide aqueux contenant un ou plusieurs composés organiques volatils ou entraînables à la vapeur d'eau et éventuellement des sucres.

L'industrie agro-alimentaire traite annuellement par concentration des tonnages considérables de jus sucrés en vue de la préparation de produits alimentaires variés, tels que jus de fruits concentrés et sirops. En particulier, le secteur vinicole dispose de millions d'hectolitres de moûts divers dont la concentration partielle est impérative pour réduire les coûts de stockage avant traitement, par exemple en vue de la préparation de sirops de sucre de raisin.

A ce jour, la concentration des jus sucrés est essentiellement effectuée par évaporation sous pression réduite. Une telle technique présente, entre autres inconvénients, le risque d'un entraînement, partiel ou total, de nombreux composés organiques présents dans ces jus et en particulier d'arômes, ce qui a pour effet de fortement affecter les qualités et notamment les qualités organoleptiques des jus concentrés obtenus.

De ce fait, la Demanderesse s'est intéressée a d'autres techniques de concentration et plus particulièrement à la concentration par pervaporation.

Cette dernière technique a essentiellement été utilisée jusqu'à présent dans le but d'extraire quasi-sélectivement l'un des constituants liquide d'un mélange de plusieurs liquides, notamment pour extraire quasi-sélectivement l'eau d'un mélange eau-éthanol, ce mélange étant amené au contact de la face amont d'une membrane permsélective et l'eau étant transférée, préférentiellement à l'éthanol, de cette face amont à la face aval de la membrane par réduction de sa pression partielle du côté de ladite face aval, l'eau ainsi transférée étant libérée de cette dernière face sous la forme d'un perméat à l'état vapeur.

Il y a lieu de noter que dans le cas de la concentration d'un jus sucré contenant des arômes, le but recherché est l'extraction la plus sélective possible du solvant (eau) d'un liquide (aqueux) contenant des solutés (notamment sucres et arômes) en concentrant ainsi lesdits solutés sans perte ni dégradation de ceux-ci. Or, les membranes utilisées à ce jour pour la pervaporation sont inappropriées pour atteindre ce but, avec un flux important d'eau à travers la membrane et une sélectivité élevée de transfert de l'eau à une température suffisamment basse pour assurer l'absence de transformation des composés organiques des jus biologiques traités et, partant, l'absence de modification de leurs qualités organoleptiques.

Dans ces conditions, la Demanderesse a poussé plus avant l'étude de la possibilité d'appliquer la technique de pervaporation à la concentration de jus, sucrés ou non, contenant des arômes.

Elle a ainsi abouti à la présente invention qui permet de remédier aux différents inconvénients rencontrés avec les techniques de concentration actuelles. Cette invention consiste plus précisément dans un procédé de concentration d'un liquide aqueux contenant un ou plusieurs composés organiques volatils ou entraînables à la vapeur d'eau et éventuellement des sucres, ce procédé étant caractérisé en ce qu'il comprend une étape de pervaporation qui consiste dans

la mise en contact dudit liquide avec une première face dite face amont, d'une membrane comprenant ladite première face et une seconde face dite face aval, ladite membrane étant constituée par un polymère insoluble dans l'eau, absorbant l'eau et comprenant de 20 à 80 % en poids de motifs monomère acide carboxylique polymérisés et/ou greffés, les groupes carboxyle portés par ces motifs étant en tout ou partie sous forme de sel, et

le maintien, du côté de la face aval de la membrane, d'une pression inférieure à la pression partielle de vapeur d'eau dudit liquide aqueux à concentrer à la température à laquelle il est mis en contact de ladite face amont,

de sorte que l'eau du liquide aqueux est transférée, préférentiellement auxdits composés organiques et sucres, de la face amont à la face aval de la membrane, pour obtenir, du côté de cette face aval, un perméat sous forme vapeur essentiellement exempt desdits composés organiques et sucres et, du côté de la face amont, un rétentat aqueux liquide enrichi en lesdits composés organiques et sucres.

Grâce notamment à sa forte hydrophilie due à la présence en son sein des groupes carboxyle en tout ou partie sous forme de sel, cette membrane fait preuve d'une très grande sélectivité en assurant la rétention quasi-totale des composés organiques et sucres ; elle permet en outre l'extraction de l'eau avec un flux important. En effet, en raison de cette hydrophilie et, partant du pouvoir absorbant qui en résulte, une grande quantité d'eau est absorbée dans la membrane ; l'eau transférée extraite par la face aval de la membrane sous forme de vapeur, libère au sein de la membrane à proximité de la face aval un certain volume libre intramoléculaire qui, toujours en raison de ce pouvoir absorbant, est immédiatement comble par une nouvelle quantité d'eau provenant de la face amont, qui est à son tour extraite par la face aval. De

EP 0 380 424 A1

ce fait, on assiste à un transfert rapide et ininterrompu de matière depuis la face amont jusqu'à la face aval de la membrane.

Il est particulièrement avantageux selon l'invention, que le polymère constituant la membrane soit réticulé et présente un degré de réticulation suffisant pour pouvoir être réalisé sous la forme d'un film souple ; dans ce cas en effet, ce film est utilisable tel quel en tant que membrane.

Le liquide aqueux à concentrer selon le procédé selon l'invention, peut notamment être un jus sucré contenant des arômes constituant lesdits composés organiques. Il peut s'agir en particulier d'un jus de fruits ou d'un moût, contenant des sucres tels que glucose et fructose et des arômes tels que des cétones, aldéhydes et esters divers comportant 4 à 5 atomes de carbone et des composés terpéniques comportant 10 atomes de carbone ou plus comme le géraniol et le limonène par exemple. Un tel jus sucré, ainsi que les jus produits par entrainement à la vapeur d'essences aromatiques, contiennent en général un mélange d'acides organiques, tels qu'acides tartrique, malique, lactique et acétique, et de sels de ceux-ci qui en fixent le pH par effet tampon à des valeurs inférieures à 7. Dans ces conditions, les groupes carboxyle des motifs monomère acide carboxylique du polymère constituant la membrane, se trouvent en tout ou partie salifiés par établissement d'un état d'équilibre d'échange de protons avec ces jus et de ce fait, ladite membrane se trouve dotée d'un pouvoir absorbant d'eau considérable. Le degré de salification dépendant notamment de la constitution desdits jus, en particulier des concentrations des cations alcalins et éventuellement des cations autres présents dans lesdits jus, ce degré de salification sera différent d'un jus à traiter à l'autre et pourra donc varier dans de très larges limites. Il est à noter que si le jus à traiter possède une constitution non susceptible de provoquer la salification des groupes carboxyle, la membrane est soumise, avant son utilisation, à un traitement par une base, par exemple une base minérale telle qu'une solution aqueuse de NaOH ou KOH.

Les concentrations en sucres et en arômes du liquide aqueux à concentrer selon l'invention peuvent varier dans de très larges domaines. En pratique, les liquides aqueux à traiter présenteront généralement une concentrations en sucres variant entre 0 (liquides non sucrés) et 80 % en poids ; quant aux arômes, leur concentration pourra atteindre une valeur permettant la production, par mise en oeuvre du procédé selon l'invention, d'arômes totalement déshydratés.

Il est possible d'effectuer l'étape de pervaporation sur un liquide à la température ambiante, mais on préfère toutefois opérer sur un liquide à concentrer dont la température est supérieure à la température ambiante mais inférieure à sa température d'ébullition à la pression règnant du côté de la face amont de la membrane. En procédant de cette manière, il est en effet possible d'accroître le flux de matière à travers la membrane, sans pour autant affecter de manière sensible la sélectivité de cette dernière. Le choix de la température sera en fait essentiellement fonction de la stabilité thermique du polymère constituant la membrane et des constituants du liquide aqueux à concentrer et dans le cas des jus de fruits et des moûts, cette température sera avantageusement non supérieure à 70 °C pour éviter toute dénaturation des arômes.

Selon un premier mode de réalisation de l'invention, le polymère formant la membrane est un polymère réticulé d'acide carboxylique $\alpha,\beta$-insaturé, de préférence d'acide acrylique ou d'acide méthacrylique, une partie au moins des groupes carboxyle de ce polymère étant sous forme de sel, en particulier sous forme de sel de métal alcalin, de préférence de sel de sodium ou de potassium.

Ce type de polymère, largement décrit dans la littérature, peut par exemple être préparé en mettant en suspension une solution aqueuse d'un mélange d'acide carboxylique $\alpha,\beta$-insaturé et d'un sel de métal alcalin de cet acide, dans un solvant hydrocarboné aliphatique ou alicyclique, puis en soumettant la suspension résultante à une polymérisation en présence d'un initiateur de polymérisation radicalaire et d'une quantité d'agent de réticulation suffisante pour obtenir le degré de réticulation souhaité. Pour avoir de plus amples détails concernant la préparation dudit polymère, on pourra se reporter utilement par exemple à EP-A-0 234 202 et à EP-A-0 036 463.

Selon un second mode de réalisation de l'invention, le polymère formant la membrane est un polymère chimiquement inerte, insoluble dans l'eau et réticulé, sur lequel est greffé un monomère acide carboxylique $\alpha,\beta$-insaturé (de préférence un monomère acide acrylique ou acide méthacrylique, et/ou un polymère de ce monomère, une partie au moins des motifs monomère acide carboxylique greffés étant sous forme de sel, en particulier sous forme de sel de métal alcalin, de préférence de sel de sodium ou de potassium.

Ledit polymère chimiquement inerte, insoluble et réticulé peut être d'un type quelconque. On préfère toutefois qu'il soit choisi parmi les polyoléfines, copolyoléfines, polymères fluorés et copolymères fluorés, réticulés et insolubles dans l'eau. Parmi ceux-ci, on préfère tout particulièrement les polyoléfines et les polyoléfines fluorées, réticulées et insolubles dans l'eau, telles qu'un polyéthylène ou un polyfluoroéthylène, insoluble et réticulé.

Le polymère insoluble dans l'eau, réticulé et greffé sus-mentionné, peut être obtenu par mise en oeuvre

3

de toute technique classique de réticulation et de greffage, et en faisant suivre éventuellemnt par une opération de salification partielle ou totale au moyen d'une base appropriée telle que soude ou potasse par exemple, ladite technique faisant appel à titre de matières premières, à un monomère acide carboxylique $\alpha,\beta$-insaturé et à un polymère chimiquement inerte. Ce monomère est de préférence l'acide acrylique ou l'acide méthacrylique. Quant au polymère chimiquement inerte, il se présente de préférence sous la forme d'un film et il peut être d'un type quelconque et notamment du type polyoléf ines, copolyoléfines, polymères fluorés et copolymères fluorés, parmi lesquels une préférence toute particulière est donnée aux polyoléfines et aux polyoléfines fluorées, telles que polyéthylène ou polyfluoroéthylène.

Il est particulièrement avantageux de préparer ledit polymère insoluble dans l'eau, réticulé et greffé par réaction dudit monomère acide carboxylique $\alpha,\beta$-insaturé sur ledit polymère chimiquement inerte, sous ou après irradiation du monomère et/ou du polymère par un faisceau d'électrons accélérés ou un rayonnement de haute énergie, cette réaction étant éventuellement suivie par la salification de tout ou partie des motifs monomère acide carboxylique greffés du produit résultant. Le faisceau d'électrons accélérés et le rayonnement mis en oeuvre devront bien entendu posséder une énergie suffisante pour générer la formation de radicaux libres sur le monomère et/ou le polymère chimiquement inerte sans pour autant dégrader ce monomère ou ce polymère. En outre, l'irradiation sera réalisée à des doses suffisantes pour atteindre le degré de réticulation souhaitée et notamment des doses au moins égales à 1 mégarad, la limite supérieure étant la dose provoquant la dégradation des matières premières. Il est à noter que, lorsque le monomère est présent pendant l'irradiation, il se produit à la fois une réticulation du polymère chimiquement inerte, une polymérisation éventuelle du monomère acide carboxylique $\alpha,\beta$-insaturé et un greffage dudit monomère et/ou polymère de ce monomère sur le polymère chimiquement inerte avant, après et/ou simultanément à la réticulation de ce dernier polymère. Une tel le méthode de réticulation et de greffage est par exemple décrite dans le brevet britannique N° 1 588 625 auquel on pourra utilement se reporter.

Le procédé selon l'invention comprend avantageusement l'étape supplémentaire consistant à soumettre le rétentat à une nouvelle opération de pervaporation ; il est ainsi possible d'amener le rétentat au degré de concentration souhaité en choisissant de manière appropriée le nombre et/ou la durée des opérations de pervaporation.

En outre, le procédé selon l'invention est de préférence réalisé en continu auquel cas l'étape de pervaporation est réalisée en faisant circuler le liquide aqueux à concentrer en continu le long de la face amont de la membrane et en évacuant le perméat en continu de la face aval de la membrane ; en procédant de cette manière et en prévoyant une ou plusieurs opérations supplémentaires de pervaporation comme indiqué au paragraphe précédent, il est possible, contrairement à la technique d'évaporation sous pression réduite classique, où la surface d'évaporation est limitée par des considérations évidentes de coût d'investissements, de disposer globalement d'une surface de pervaporation beaucoup plus importante et, partant, d'une capacité d'extraction d'eau accrue.

L'épaisseur de la membrane mise en oeuvre dans le procédé selon l'invention, sera choisie aussi faible que possible pour que le flux de perméation soit aussi élevé que possible ; cette épaisseur devra néanmoins être suffisante pour que la membrane possède une résistance mécanique adaptée aux opérations de pervaporation. En général, cette épaisseur peut être de l'ordre de 10 à 100 $\mu$ pour des membranes homogènes et de l'ordre de 2 à 10 $\mu$ dans le cas de membranes fixées sur un support microporeux

Il est à noter également que dans le procédé selon l'invention, la pression souhaitée du côté de la face aval de la membrane peut être réalisée en y maintenant, au moyen d'une source de vide telle qu'une pompe à vide, une pression réduite par rapport à celle règnant du côté de la face amont, des moyens de condensation du pervaporat étant avantageusement prévus entre ladite face aval et ladite source de vide, de sorte qu'en régime normal cette dernière n'assure que l'évacuation des incondensables. En variante, la pression du côté de la face aval de la membrane peut également être réalisée en balayant cette face aval avec un courant de gaz vecteur.

Le procédé selon l'invention peut être mis en oeuvre dans tout type d'appareil de pervaporation bien connu de l'homme de métier, appareil tel que décrit par exemple dans le brevet européen n° 0 181 656 ou dans la demande de brevet européen n° 0 118 760, documents auxquels on pourra utilement se référer.

D'autres caractéristiques et avantages du procédé objet de la présente invention ressortiront des exemples ci-après donnés à titre illustratif de l'invention et non limitatif.

Exemple 1 : Protocole de préparation d'une membrane de polyéthylène réticulé sur lequel est greffé de l'acide acrylique

On prépare tout d'abord de manière connue en soi, un film de polyéthylène ne contenant pas de capteurs de radicaux et présentant une faible épaisseur, par exemple une épaisseur de 15 à 100 $\mu$. On irradie ce film à l'aide d'électrons accélérés à 1 MeV ou de rayons $\gamma$ à des doses de 4 à 12 MRad. On prépare par ailleurs une solution de greffage comprenant :

- 50 % d'une solution aqueuse de $FeSO_4$ ayant une concentration comprise entre 1 et 5 g/l, et
- 50 % d'acide acrylique,

à laquelle on ajoute 1 à 2 % d'acide sulfurique concentré.

Après dégazage de cette solution par circulation d'azote, on y immerge le film de polyéthylène irradié, durant 10 à 30 heures selon l'épaisseur, à une température de 90 à 95° C, puis on rince le film à l'eau. On obtient ainsi un film de polyéthylène réticulé et greffé à coeur par l'acide acrylique, le taux pondéral de greffage étant compris entre 40 et 200 % d'acide acrylique. Après traitement de ce film par une solution aqueuse de NaOH, on obtient un film pouvant être utilisé tel quel en tant que membrane pour la mise en oeuvre du procédé selon l'invention.

Exemple 2 : Appareillage de pervaporation utilisé pour la réalisation des essais objet des exemples 3 et 4 ci-après

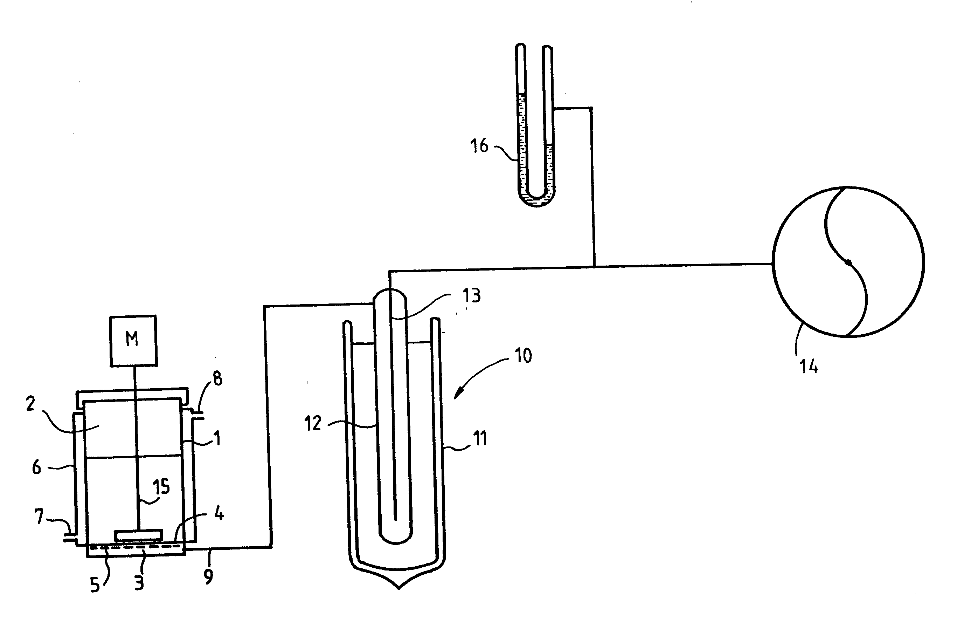

Cet appareillage, représenté schématiquement sur la figure unique annexé, comprend une cellule de pervaporation constituée d'une chambre fermée 1 partagée en un compartiment supérieur 2 et un compartiment inférieur 3 par une membrane de pervaporation 4 supportée par une grille 5, des moyens (non représentés, étant prévus pour assurer une parfaite étanchéité au liquide au niveau de la zone de fixation de la membrane sur la paroi latérale de la chambre 1. Le compartiment supérieur 2, qui est destiné à recevoir le liquide à traiter, est pourvu d'un chemisage externe 6 dans lequel est destiné à circuler en continu un fluide de chauffage (de l'eau chaude par exemple) permettant de maintenir le liquide à traiter à une température sensiblement constante (60° C en l'occurence), ledit fluide de chauffage étant amené par une arrivée 7 et évacué par une sortie 8. Le compartiment inférieur 3 est pourvu d'une sortie 9 de vapeur. L'appareillage en cause comprend en outre un piège cryogénique 10 dont le rôle est de condenser le perméat sous forme vapeur issu de la sortie 9. Ce piège 10 est constitué d'un vase Dewar 11 rempli d'azote liquide dans lequel plonge un tube vertical 12 communiquant par sa partie haute à la sortie 9 ; dans ce tube 12 est en outre prévue une tubulure 13 prenant naissance à une certaine distance du fond du tube 12 et communiquant avec une pompe à vide 14. L'appareillage ainsi décrit est complété d'une part par un système d'agitation 15 disposé dans le compartiment 2 et assurant une uniformité de la température du liquide à traiter et d'autre part d'un moyen de contrôle de la pression 16 disposé entre la tubulure 13 et la pompe à vide 14.

Exemple 3 : Essai de concentration par pervaporation au moyen d'une membrane constituée par un film de polyéthylène réticulé à faible degré de greffage par l'acide acrylique

Pour cet essai, on utilise une membrane préparée par mise en oeuvre d'un protocole identique à celui de l'exemple 1, si ce n'est que la concentration en acide acrylique de la solution de greffage a été réduite pour obtenir un polyéthylène réticulé présentant un taux de greffage tel que sa capacité d'échange soit de 3,9 méq/g. Quant au liquide à traiter, il consiste en un moût de raisin contenant environ 200 g/l de sucres (51 % de glucose et 49 % de fructose).

Le traitement de ce moût pendant une heure dans l'appareillage décrit à l'exemple 2 (pression de 1 Torr à la pompe 14), a conduit aux résultats rassemblés dans le tableau 1 ci-après. Ces résultats montrent que l'on extrait sélectivement par pervaporation l'eau contenue dans le moût, avec un flux de 1,7 kg par heure et par unité de surface de membrane (1,7 kg/h.m²), à 60° C. En effet, la concentration en glucose du perméat est inférieure au seuil de détection de la méthode de dosage enzymatique utilisée pour le dosage de celui-ci, soit 1 mg/l. Il apparaît également, comme l'indiquent les mesures de pH, que très peu d'acides contenus dans le moût (essentiellement acide tartrique) passent dans le perméat. Par ailleurs, la mesure de la D.C.O. montre le passage d'une très faible quantité de produits solubles, encore s'agit il là de produits sans qualités organoleptiques intéressantes.

La pervaporation a ensuite été poursuivie durant 24 heures et la charge en moût de raisin a alors été renouvelée. Le taitement de cette nouvelle charge pendant une heure, dans les mêmes conditions que précédemment a conduit aux résultats rassemblés dans le tableau 2 ci-après. Ces résultats montrent la stabilité des performances de la membrane mis en oeuvre, la très faible baisse de flux enregistrée, de l'ordre de 3 %, n'étant pas significative.

Exemple 4 : Essai de concentration par pervaporation au moyen d'une membrane constituée par un film de polyéthylène réticulé à fort degré de greffage par l'acide acrylique

Pour cet essai, on utilise le même type de membrane que dans l'exemple précédent, si ce n'est que le polymère qui la constitue présente un degré de greffage plus élevé et qui est tel que la capacité d'échange dudit polymère soit de 9,5 méq/g.

On opère dans les mêmes conditions qu'à l'exemple précédent, respectivement

(a) sur un moût concentré de raisin contenant environ 800 g/l de sucres (51 % de glucose et 49 % de fructose,

(b) sur un liquide résultant de la dilution au 1/2 du moût défini sous (a), et

(c) sur un moût à 200 g/l de sucres, défini dans l'exemple 3.

Les résultats obtenus répertoriés dans le tableau 3 ci-après, mettent en évidence l'amélioration des performances de pervaporation par utilisation d'une membrane de polyéthylène réticulé plus fortement greffé en acide acrylique. En effet, par comparaison avec les résultats des tableaux 1 et 2, il apparaît que le flux de perméat obtenu avec le liquide (a) est multiplié par 6, c'est-à-dire atteint plus de 10 kg/h.m$^2$, sans entrainer de baisse sensible de sélectivité vis à vis des arômes et sucres. Il apparaît également que la membrane est plus sélective vis à vis des espèces ionisées et des petites molécules à propriétés acido-basiques (voir pH et conductivité).

Les résultats du tableau 3 montrent en outre que la pervaporation appliquée à des jus sucrés, ici des moûts de raisin, permet d'atteindre un niveau de déshydratation, impossible à obtenir avec les techniques d'extraction d'eau par osmose inverse.

TABLEAU 1

| | Flux (kg/h.m$^2$) | pH | Conductivité ($\mu$S) | Glucose (g/l) | D.C.O. (g02/l) |
|---|---|---|---|---|---|
| Moût à traiter | | 3,00 | 1840,0 | 95 | >200 |
| Perméat | 1,70 | 4,15 | 21,2 | <0,001 | 1,09 |
| Rétentat | | 2,95 | 1870,0 | 106 | >200 |

TABLEAU 2

| | Flux (kg/h.m$^2$) | pH | Conductivité ($\mu$S) | Glucose (g/l) | D.C.O. (g02/l) |
|---|---|---|---|---|---|
| Moût à traiter | | 3,00 | 1840,0 | 95 | >200 |
| Perméat | 1,65 | 4,05 | 22,3 | <0,001 | 1,09 |
| Rétentat | | 2,95 | 1840,0 | 106 | >200 |

TABLEAU 3

|  | Flux (kg/h.m²) | pH | Conductivité (µS) | Glucose (g/l) | D.C.O. (gO2/l) |
|---|---|---|---|---|---|
| Moût (c) |  | 2,90 | 1840,0 | 98 | >200 |
| Perméat | 10,3 | 5,40 | 10,1 | <0,001 | 2,43 |
| Rétentat |  | 2,90 | 1890,0 | 111 | >200 |
| Moût (b) |  | 2,70 | 1350,0 | 196 | >400 |
| Perméat | 7,2 | 4,15 | 24,0 | <0,001 | 1,31 |
| Rétentat |  | 2,70 | 1370,0 | 221 | >400 |
| Moût (a) |  | 2,55 | 150,0 | 393 | >800 |
| Perméat | 0,9 | 3,00 | 292,5 | <0,001 | 5,56 |
| Rétentat |  | 2,55 | 150,0 |  | >800 |

**Revendications**

1. Procédé de concentration d'un liquide aqueux contenant un ou plusieurs composés organiques volatils ou entraînables à la vapeur d'eau et éventuellement un ou plusieurs sucres, caractérisé en ce qu'il comprend une étape de pervaporation qui consiste dans

la mise en contact dudit liquide avec une première face dite face amont, d'une membrane comprenant ladite première face et une seconde face dite face aval, ladite membrane étant constituée par un polymère insoluble dans l'eau, absorbant l'eau et comprenant de 20 à 80 % en poids de motifs monomère acide carboxylique polymérisés et/ou greffés, les groupes carboxyle portés par ces motifs étant en tout ou partie sous forme de sel, et

le maintien, du côté de la face aval de la membrane, d'une pression inférieure à la pression partielle de vapeur d'eau dudit liquide aqueux à concentrer à la température à laquelle il est mis en contact de ladite face amont,

de sorte que l'eau du liquide aqueux est transférée, préférentiellement auxdits composés organiques et sucres, de la face amont à la face aval de la membrane, pour obtenir, du côté de cette face aval, un perméat sous forme vapeur essentiellement exempt desdits composés organiques et sucres et, du côté de la face amont, un rétentat aqueux liquide enrichi en lesdits composés organiques et sucres.

2. Procédé selon la revendication 1, caractérisé en ce que le polymère constituant la membrane est réticulé et présente un degré de réticulation suffisant pour pouvoir être réalisé sous la forme d'un film souple.

3. Procédé selon la revendication 1 ou 2, caractérisé en ce que le liquide aqueux à concentrer est constitué par un jus sucré contenant des arômes constituant lesdits composés organiques.

4. Procédé selon la revendication 3, caractérisé en ce que le jus sucré contenant des arômes est un jus de fruits ou un moût.

5. Procédé selon l'une des revendications précédentes, caractérisé en ce que le polymère formant la membrane est un polymère réticulé d'acide carboxylique α,β-insaturé, une partie au moins des motifs monomère acide carboxylique polymérisés de ce polymère étant sous forme de sel.

6. Procédé selon l'une des revendications 1 à 4, caractérisé en ce que le polymère formant la membrane est un polymère chimiquement inerte, insoluble dans l'eau et réticulé, sur lequel est greffé un monomère acide carboxylique α,β-insaturé et/ou un polymère de ce monomère, une partie au moins des motifs monomère acide carboxylique greffés étant sous forme de sel.

7. Procédé selon la revendication 6, caractérisé en ce que le polymère chimiquement inerte, insoluble et réticulé est choisi parmi les polyoléfines, copolyoléfines, polymères fluorés et copolymères fluorés, réticulés et insolubles dans l'eau.

8. Procédé selon la revendication 7, caractérisé en ce que le polymère chimiquement inerte, insoluble et réticulé est un polyéthylène ou un polyfluoroéthylène, insoluble et réticulé.

9. Procédé selon l'une des revendications 5 à 8, caractérisé en ce que l'acide carboxylique α,β-insaturé est l'acide acrylique ou l'acide méthacrylique.

10. Procédé selon l'une des revendications précédentes, caractérisé en ce que tout ou partie des motifs monomère acide carboxylique polymérisés ou greffés se présente sous la forme de sel de métal alcalin.

11. Procédé selon l'une des revendications précédentes, caractérisé en ce qu'il comprend en outre l'étape consistant à soumettre ledit rétentat à au moins une opération supplémentaire de pervaporation.

12. Procédé selon l'une des revendications précédentes, caractérisé en ce que l'étape de pervaporation est réalisée en faisant circuler le liquide aqueux à concentrer en continu le long de la face amont de la membrane et en évacuant le perméat en continu de la face aval de la membrane.

13. Procédé selon l'une des revendications précédentes, caractérisé en ce que la pression souhaitée du côté de la face aval de la membrane est établie en y maintenant une pression réduite par rapport à celle règnant du côté de la face amont de la membrane ou en balayant ladite face aval avec un courant de gaz vecteur.

14. Procédé selon la revendication 13, caractérisé en ce qu'il comprend une étape de condensation du perméat.

15. Procédé selon l'une des revendications précédentes, caractérisé en ce que le liquide aqueux à concentrer est à une température supérieure à la température ambiante mais inférieure à sa température d'ébullition à la pression règnant du côté de la face amont de la membrane.

16. Procédé selon la revendication 15, caractérisé en ce que ledit liquide aqueux est à une température non supérieure à 70 °C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 603 135 (M. LEFEBVRE)<br>--- | | B 01 D 61/36<br>A 23 L 2/08 |
| A | FR-A-1 529 382 (IONICS INC.)<br>--- | | |
| A | FR-A-1 578 813 (UNILEVER)<br>--- | | |
| A | PATENT ABSTRACTS OF JAPAN, vol. 7, no. 181 (C-180)[1326], 10 août 1983, page 158 C 180; & JP-A-58 88 008 (ASAHI GLASS K.K.) 26-05-1983<br>--- | | |
| A | PATENT ABSTRACTS OF JAPAN, vol. 7, no. 181 (C-180)[1326], 10 août 1983, page 158 C 180; & JP-A-58 88 007 (ASAHI GLASS K.K.) 25-05-1983<br>--- | | |
| A | PATENT ABSTRACTS OF JAPAN, vol. 7, no. 175 (C-179)[1320], 3 aOût 1983, page 147 C 179; & JP-A-58 84 005 (ASAHI GLASS K.K.) 20-05-1983<br>--- | | |
| A | GB-A-2 174 619 (U.S. DEPARTMENT OF ENERGY)<br>--- | | DOMAINES TECHNIQUES RECHERCHES (Int. Cl.5)<br><br>B 01 D 61/00<br>A 23 L 2/00 |
| A | WO-A-8 600 819 (B.P.)<br>--- | | |
| A | US-A-3 225 107 (E.V. KIRKLAND)<br>--- | | |
| A | FR-A-2 096 358 (MONSANTO)<br>----- | | |

Le présent rapport a été établi pour toutes les revendications

| Lieu de la recherche | Date d'achèvement de la recherche | Examinateur |
|---|---|---|
| LA HAYE | 04-05-1990 | DEVISME F.R. |

EPO FORM 1503 03.82 (P0402)